# EUROPEAN PATENT SPECIFICATION

(11) **EP 1 091 281 B1**
(45) Date of publication and mention of the grant of the patent: **23.06.2004**
(21) Application number: 00308412.6
(22) Date of filing: 26.09.2000
(51) Int. Cl.: G06F 3/033, G06F 3/023

(54) **Computer peripheral unit communication system**
Kommunikationssystem einer Rechnerperipherieeinheit
Système de communication d'une unité périphérique d'ordinateur

(30) Priority: 07.10.1999 JP 28669299
(43) Date of publication of application: 11.04.2001
(73) Proprietor: ALPS ELECTRIC CO., LTD., Ota-ku Tokyo 145 (JP)
(72) Inventor: Yasuda, Yuichi, Alps Electric Co., Ltd, Tokyo 145 (JP); Yamagata, Kazuyoshi, Alps Electric Co., Ltd, Tokyo 145 (JP); Kuwabara, Isao, Alps Electric Inc., San Jose, California 95135 (JP)
(74) Representative: Kensett, John Hinton

(56) References cited:
- US-A- 5 049 863
- US-A- 5 136 285
- US-A- 5 485 614
- US-A- 5 793 359
- US-A- 5 854 621
- US-A- 5 890 015

## Description

The present invention relates to computer peripheral unit communication systems for connecting computers with peripheral units, and more particularly, relates to a computer peripheral unit communication system for connecting a computer with a peripheral unit through an interface by wire, thereby enabling a user to use a plurality of peripheral units through the interface.

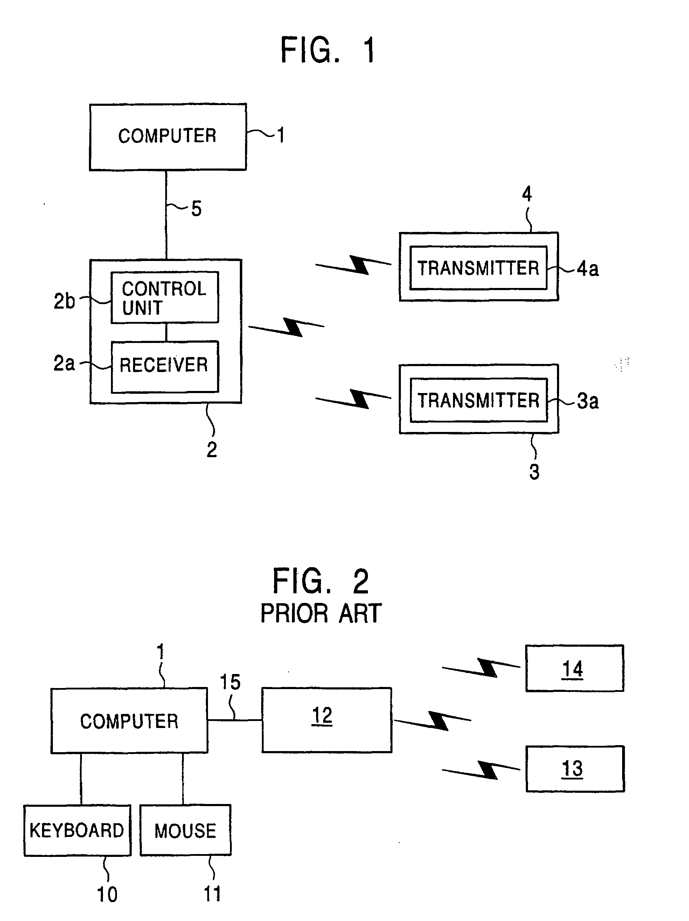

Fig. 2 is a block diagram of the use configuration of a conventional computer and peripheral units.

Referring to Fig. 2, a keyboard 10 and a mouse 11 are connected to a computer 1. In this example, the keyboard 10 and the mouse 11 are connected by wire through a predetermined interface to a keyboard port and a mouse port, respectively, of the computer 1.

Recently, an increasing number of peripheral units have been connected using wireless systems. Since no cable is used between the computer 1 and such a wireless peripheral unit, the operability is improved. As illustrated in Fig. 2, a wireless peripheral unit can be used by connecting an external adapter 12, which is used as a receiver for receiving data from the wireless peripheral unit, to a port of the computer 1 through a cable 15. Accordingly, a wireless mouse 13 and another wireless peripheral unit 14 are connected through the external adapter 12.

In the above example, a universal serial bus (USB) is often used as an interface between the computer 1 and the mouse 13 and the peripheral unit 14 to connect the computer 1 with the mouse 13 and the peripheral unit 14.

The USB is connected with a unit (USB hub) for establishing more USB ports, and a plurality of peripheral units can be connected by a single cable.

The conventional connection configuration of the peripheral units such as the keyboard 10 and the mouse 11 is difficult to handle since the number of cables connected to the computer 1 is increased. The connection configuration of the peripheral units using the conventional wireless system requires the external adapter 12, which is to be connected to the computer 1 through the cable 15. This results in additional space being taken up by the installation of the external adapter 12.

When a plurality of peripheral units is connected, driver software conforming to each of the peripheral units must be installed in the computer 1. As a result, the processing performed by the computer 1 becomes more complicated.

Since no power can be supplied from the computer 1 to the peripheral unit using the wireless system, the peripheral unit is required to have its own power source such as batteries. When the power from the power source is completely depleted, the wireless peripheral unit becomes inoperative. When the external adapter 12 as a receiver is used far away from a transmitter of the peripheral unit, the energy consumption increases and consumption of battery power is accelerated.

When another peripheral unit having the same channel (frequency) or the same identification is used nearby, it is difficult to discriminate between signals generated by the peripheral unit that is actually being operated and signals generated by another peripheral unit used nearby. This causes crosstalk and prevents normal input.

An example of a known system employing a wireless peripheral unit, such as a key input unit, can be found in US-A-5,049,863.

In order to solve the above problems, it is an object of the present invention to provide a computer peripheral unit communication system for performing input when power from a power source is consumed, and for preventing crosstalk with another peripheral unit, without increasing the number of cables.

According to the present invention there is provided a computer peripheral unit communication system comprising: a computer; a keyboard connected to the computer through a predetermined interface by wire or by wireless; a pointing device for performing wireless communication with the keyboard; the keyboard including wireless communication means for performing communication with the pointing device; and control means for processing signals sent from the keyboard and the pointing device and transmitting the signals to the computer through the interface; keyboard data and pointing device data received by the wireless communication means being sent from the control means to the computer as discriminable data; wherein the control means performs environmental setup including setting intercommunication between the keyboard and the pointing device or changing the setting by operating the keyboard or the pointing device; and an instruction for the environmental setup is given by using a signal which is not used in normal operations between the keyboard and the computer; characterised in that the control means converts the pointing device data, received by the wireless communication means, to keyboard data and transmits the converted data to the computer; and performs a switching operation for converting or not converting the pointing device data to keyboard data by the environmental setup.

With this arrangement, an external adapter can be connected to the computer and an interconnection cable for connecting the external adapter to the computer are unnecessary. Hence, a space for installing the external adapted is not necessary, and the operability is improved.

The control unit may set interconnection between the first peripheral unit and the second peripheral unit or changes the setting by operating the first peripheral unit or the second peripheral unit.

With this arrangement, the setting or changing of the setting is not performed using the computer. It is thus not necessary to install driver software in the computer. This makes the processing performed by the computer less complicated and lessens the burden on the computer.

As instruction to set or change the interconnection may be given from the control unit to the computer by using a signal which is not used in the normal operation between the first peripheral unit and the computer.

The first peripheral unit may be a keyboard, and the second peripheral unit may be a pointing device.

The control unit may transmit keyboard data, and pointing device data received by the wireless communication unit as discriminable data to the computer.

For example, the interconnection is set or changed by a key operation using a combination of keys which are generally used when operating the keyboard. Alternatively, an additional key may be provided in addition to the generally-used keys, and the setting or changing of the setting is performed by a key operation using the additional key or a combination of the additional key and the generally-used keys.

In the case of using a combination of the pointing device such as a mouse and the keyboard, communication is nearly always stable because the keyboard and the mouse are usually used near each other. In the case of using the mouse, the mouse is used by moving it on a desktop. When the mouse employing a wireless system is used, the mouse is not hindered by a cable and the operability is improved.

The control unit may convert the pointing device data received by the wireless communication unit to the same data as that for the keyboard and may send the data to the computer. By operating the keyboard or the pointing device, the pointing device data may be switched by the control unit among the keyboard data, the discriminable data, and the same data as that for the keyboard.

With this arrangement, a key operation of the keyboard using predetermined keys provided on the keyboard can be performed by the mouse instead of the keyboard. As a result, the computer can be operated by operating only the mouse.

The control unit may send a key operation of the keyboard as the pointing device data to the computer. By the key operation or by operating the pointing device, a signal generated by the key operation may be switched between whether it is sent as the keyboard data or the pointing device data.

Accordingly, when batteries provided with the mouse are completely consumed and the mouse becomes inoperative, a function similar to that of the mouse can be output from the keyboard. Also the keyboard can perform cursor movements, clicking actions, and scrolling.

The control unit may include a strength measuring unit for measuring the strength of a received signal received by the wireless communication unit and a setting unit for setting a threshold value relative to the strength. When a measured value is smaller than the threshold value, the control unit stops sending data from the second peripheral unit to the computer.

Specifically, as the mouse is moved farther away from the keyboard, the strength of the signal received by the wireless communication unit decreases. Comparison between the strength and the threshold value enables a user to discriminate between the received signal from the mouse and that from another mouse, even when the other mouse uses the same channel (frequency) and the same identification and is used nearby. It is thus possible to prevent crosstalk. When a plurality of mouses having the same channel and the same identification is used, it is possible to switch the available mouse by changing the distance between the mouse and the keyboard. This is as advantages as switching the identification.

Accordingly, it is only necessary to provide a control unit in the keyboard, and the mouse circuit is simplified. Hence, the cost is reduced.
Fig.1 is a block diagram of the use configuration of a computer peripheral unit communication system according to an embodiment of the present invention; and
Fig. 2 is a block diagram of the use configuration of a conventional computer peripheral unit communication system.

Fig. 1 shows the connection configuration of a computer peripheral unit communication system according to an embodiment of the present invention.

Referring to Fig. 1, the communication system includes a computer 1, a keyboard 2, a mouse 3, and another peripheral unit 4.

The computer 1 is connected to the keyboard 2 through a Universal Serial Bus (USB) interface by a cable 5. Alternatively, the computer 1 and the keyboard 2 can be connected by means of wireless connection by providing the computer 1 with an external adapter (wireless communication device) functioning as a receiver shown in Fig. 2 and providing the keyboard 2 with a wireless communication device functioning as a transmitter.

The keyboard 2 includes therein a receiver 2a and a control unit 2b. The receiver 2a receives signals transmitted by means of wireless media from the mouse 3 and the peripheral unit 4. The control unit 2b includes various controllers described below.

The mouse 3 is a type of pointing device and wirelessly communicates with the keyboard 2. The wireless communication employs wireless signals which may be radio waves, infrared waves, or light waves. The pointing device is not necessarily the mouse 3. Alternatively, a trackball, a touch pad, or a stick may be used.

The mouse 3 sends various instructions to the computer 1 by, for example, moving a cursor or pointer displayed on a screen of a display connected to the computer 1. The cursor is moved by rolling a ball rotatably supported at the bottom of a housing. Push-type buttons are provided on a top surface of the housing. On-off operations are performed by pressing the push-type buttons with the fingers. Clicking actions using the buttons activate or terminate applications, execute or cancel settings, or display a menu. Besides the buttons, the housing may be provided with a rotatably-supported wheel-type operating unit. By rotating the wheel, the display screen can be scrolled.

The mouse 3 includes therein a transmitter 3a. The transmitter 3a transmits data such as cursor movement signals, clicking signals, and scrolling signals as described above via wireless signals to the receiver 2a. The data undergoes predetermined processing by the control unit 2b and is sent to the computer 1.

If necessary, the peripheral unit 4 can be connected using a wireless system. In this case, as in the mouse 3 described above, the peripheral unit 4 includes therein a transmitter 4a. The transmitter 4a uses the receiver 2a of the keyboard 2 as a common receiver and transmits data to the receiver 2a. The peripheral unit 4 is not limited to the keyboard or the mouse as long as it can be connected using a wireless communication system. For example, a game controller or a portable device such as a notebook-size personal computer or an electronic notebook can be used as the peripheral unit 4.

With the above arrangement, the mouse 3 and the peripheral unit 4 can communicate with the computer 1 by way of the keyboard 2. In the following description, the connection between the keyboard (first peripheral unit) 2 and the mouse (second peripheral unit) 3 is described.

A first controller of the control unit 2b performs environment setup by a key operation of the keyboard 2. The environment setup includes setting of intercommunication between the keyboard 2 and the mouse 3 and changing of the setting. For example, the channel (frequency) for a wireless signal or the identification is switched. Such switching is necessary to prevent crosstalk generated when peripheral units using the same channel and the same identification are used in proximity to each other.

The setting of the intercommunication and changing of the setting are performed by the key operation of the keyboard 2. The key operation used here must be different from a normal key operation such as the inputting of characters, since the computer 1 will recognize a normal key operation as being a normal key operation. It is thus necessary to generate and output a signal differing from that generated by the normal key operation. This is implemented by operating a combination of keys. Alternatively, a special additional key for performing the environment setup may be provided on the keyboard 2. The setting or changing of the setting may be performed by operating the additional key. Subsequent to entering a state in which the setting or changing of the setting can be performed, the channel is set or changed by inputting a channel number (frequency) by selecting and inputting a desired number using numeric keys provided on the keyboard 2. The setting or changing of the identification is performed in a manner similar to setting or changing of the channel.

Since the control unit 2b controls the above processing, it is not necessary to install special driver software in the computer 1. The setting or changing of the setting is performed between the keyboard 2 and the mouse 3, instead of by way of the computer 1.

In general, keyboard data and mouse data are formatted to discriminable signals by the control unit 2b, and the formatted signals are sent to the computer 1. When a switching operation is performed by the keyboard 2 or the mouse 3, the mouse data is converted to the same data as the keyboard data, or the keyboard data is converted to the same data as the mouse data, respectively, and the converted data is sent to the computer 1.

Specifically, a second controller of the control unit 2b converts the mouse data generated by operating the mouse 3 is converted to the same data as the keyboard data for the keyboard 2, and the converted data is sent to the computer 1. In this case, the switching operation is performed by a key operation using a combination of keys or the additional key provided beforehand on the keyboard 2 as in the above case. Alternatively, the switching may be executed by operating the mouse 3. In this case, the operation of the mouse 3 is substituted for the key operation of the keyboard 2.

For example, the keyboard 2 includes frequently-used keys such as operating buttons including a play button for playing a CD and a browse button for browsing the Internet. These buttons can be operated using the mouse 3 instead of the keyboard 2. The buttons can be operated by the following processes. When the housing includes two push-type buttons on the right and the left, the playing, fast-forwarding, rewinding, or volume control can be performed by simultaneously pressing both buttons on the right and the left prior to pressing one of the buttons. When the housing includes a scrolling button, the scrolling button can be used in combination with the push-type buttons. Hence, a wide variety of patterns can be set.

The second controller is set only between the keyboard 2 and the mouse 3. The keyboard 2 outputs the same data as the keyboard data, and it is thus not necessary to install special driver software in the computer 1.

A third controller of the control unit 2b converts data output by the key operation of the keyboard 2 to the same data as the mouse data, and the converted data is sent to the computer 1. Various functions normally performed by the mouse 3, such as cursor movements, clicking actions, and scrolling, are allocated to predetermined keys of the keyboard 2 by means of the key operation of the keyboard 2.

The switching operation by the third controller can be performed by the key operation of the keyboard 2 as in the above case. For example, switching is performed by the key operation using a special additional key provided in advance. Alternatively, switching can be performed by operating the mouse 3.

Concerning a fourth controller of the control unit 2b, the control unit 2b includes a strength measuring unit for measuring the strength of a received signal wirelessly received by the keyboard 2 and a setting unit for setting a threshold value relative to the strength. When a measured value is smaller than the threshold value, the received signal received by the keyboard 2 is prevented from being transmitted to the computer 1.

Specifically, the strength of the received signal decreases the further the transmitter 3a of the mouse 3 is moved away from the receiver 2a of the keyboard 2. Hence, the threshold value is set relative to the strength. Even when adjacent peripheral units having the same channel and the same identification are used nearby, the control unit 2b of the keyboard 2 can discriminate between a received signal from the mouse 3 and a received signal from another mouse.

The peripheral unit communication system is not limited to the above embodiment. For example, the receiver 2a and the control unit 2b provided in the keyboard 2 may be provided in another device such as a display.

## Claims

1. A computer peripheral unit communication system comprising:
a computer (1);
a keyboard (2) connected to the computer through a predetermined interface by wire or by wireless;
a pointing device (3) for performing wireless communication with the keyboard;
the keyboard including wireless communication means (2a) for performing communication with the pointing device; and control means (2b) for processing signals sent from the keyboard and the pointing device and transmitting the signals to the computer through the interface;
keyboard data and pointing device data received by the wireless communication means being sent from the control means to the computer as discriminable data;
wherein the control means performs environmental setup including setting intercommunication between the keyboard and the pointing device or changing the setting by operating the keyboard or the pointing device; and
an instruction for the environmental setup is given by using a signal which is not used in normal operations between the keyboard and the computer;
**characterised in that** the control means converts the pointing device data, received by the wireless communication means, to keyboard data and transmits the converted data to the computer; and performs a switching operation for converting or not converting the pointing device data to keyboard data by the environmental setup.

2. A computer peripheral unit communication system according to Claim 1, wherein the control means (26) includes strength measuring means for measuring the strength of a signal received by the wireless communication means; and setting means for setting a threshold value relative to the strength; and when a measured value is smaller than the threshold value, the control means stops sending data from the pointing device to the computer.

## Patentansprüche

1. Ein Kommunikationssystem peripherer Computereinheiten, umfassend:
einen Computer (1);
eine Tastatur (2), die drahtgebunden oder drahtlos über eine vorgegebene Schnittstelle mit dem Computer verbunden ist;
ein Zeigegerät (3) zur Ausübung drahtloser Kommunikation mit der Tastatur;
die Tastatur umfassend eine drahtlose Kommunikationseinrichtung (2a) zur Ausübung von Kommunikation mit dem Zeigegerät; und eine Steuervorrichtung (2b) zur Verarbeitung von von der Tastatur und dem Zeigegerät geschickten Signale und zur Übertragung dieser Signale über die Schnittstelle auf den Computer;
wobei von der drahtlosen Kommunikationseinrichtung empfangene Tastaturdaten und Zeigegerätdaten von der Steuervorrichtung als unterscheidbare Daten an den Computer geschickt werden;
wobei die Steuervorrichtung eine Umgebungseinstellung einschließlich Einstellung der Interkommunikation zwischen der Tastatur und dem Zeigegerät oder Änderung der Einstellung durch Betätigung der Tastatur oder des Zeigegeräts ausführt; und
wobei eine Anweisung für die Umgebungseinstellung durch die Verwendung eines Signals gegeben wird, das im normalen Betrieb zwischen der Tastatur und dem Computer nicht verwendet wird;
**gekennzeichnet dadurch, dass** die Steuervorrichtung die von der drahtlosen Kommunikationseinrichtung empfangenen Zeigegerätdaten in Tastaturdaten umwandelt und die umgewandelten Daten auf den Computer überträgt; und einen Schaltvorgang zur Umwandlung oder Nichtumwandlung der Zeigegerätdaten in Tastaturdaten durch die Umgebungseinstellung ausführt.

2. Kommunikationssystem peripherer Computereinheiten gemäß Anspruch 1, wobei die Steuervorrichtung (2b) eine Stärkemesseinrichtung zur Messung der Stärke eines von der drahtlosen Kommunikationsvorrichtung empfangenen Signals umfasst; und eine Einstellungseinrichtung zur Einstellung eines Schwellenwertes relativ zu der Stärke; und wenn ein gemessener Wert kleiner als der Schwellenwert ist, beendet die Steuervorrichtung das Schicken von Daten von dem Zeigegerät an den Computer.

## Revendications

1. Système de communication d'unités périphériques d'ordinateur, comprenant:
un ordinateur (1) ;
un clavier (2) connecté à l'ordinateur par l'intermédiaire d'une interface prédéterminée avec des fils ou sans fil ;
un dispositif de pointage (3) permettant d'établir une communication sans fil avec le clavier ;
le clavier incluant des moyens de communication sans fil (2a) permettant d'établir la communication avec le dispositif de pointage ; et des moyens de commande (2b) permettant de traiter les signaux envoyés depuis le clavier et le dispositif de pointage, et de transmettre ces signaux à l'ordinateur par l'intermédiaire de l'interface ;
les données du clavier et les données du dispositif de pointage reçues par les moyens de communication sans fil étant envoyées depuis les moyens de commande à l'ordinateur sous la forme de données différentiables ;
dans lequel les moyens de commande effectuent une configuration de l'environnement, comprenant le paramétrage de l'intercommunication entre le clavier et le dispositif de pointage, ou la modification du paramétrage, en actionnant le clavier ou le dispositif de pointage ; et
une instruction pour la configuration de l'environnement est donnée en utilisant un signal qui n'est pas utilisé dans les opérations normales entre le clavier et l'ordinateur ;
**caractérisé en ce que** les moyens de commande convertissent les données du dispositif de pointage, reçues par les moyens de communication sans fil, en données de clavier, et transmettent les données converties à l'ordinateur ; et effectuent une opération de commutation pour convertir ou ne pas convertir les données du dispositif de pointage en données de clavier par rapport à la configuration de l'environnement.

2. Système de communication d'unités périphériques d'ordinateur selon la revendication 1, dans lequel les moyens de commande (26) incluent des moyens de mesure d'intensité permettant de mesurer l'intensité d'un signal reçu par les moyens de communication sans fil ; et des moyens de paramétrage pour fixer une valeur de seuil concernant l'intensité; et, quand une valeur mesurée est inférieure à la valeur de seuil, les moyens de commande arrêtent d'envoyer des données du dispositif de pointage à l'ordinateur.
